# EUROPEAN PATENT APPLICATION

(11) **EP 4 742 575 A1**
(43) Date of publication of application: **13.05.2026**
(21) Application number: 24211640.8
(22) Date of filing: 08.11.2024
(51) Int. Cl.: H04L 1/1867, H04L 1/1829

(54) **INTERNET OF THINGS DEVICE AND NODE**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); DHANANJAYA, Harshith, 63225 Langen (DE)
(74) Representative: Grünecker Patent- und Rechtsanwälte PartG mbB

(57) **Abstract**

The present disclosure relates to an Internet of Thing, loT, device, comprising the following. A transceiver, which, in operation, communicates a signaling message for a transmission segment of a plurality of transmission segments; and a circuitry, which, in operation determines, based on the signaling message and a segment information of a comparison segment, a segment indicator for communicating the transmission segment.

## Description

### BACKGROUND

### 1. Technical field

The present disclosure relates to an loT device and its communication with a node, for example, a base station or an intermediate node connected to a base station.

### 2. Description of the Related Art

The Internet of things (IoT) market is a major source of revenue for future wireless technology and is a steadily growing market. Building, commercial, health, agriculture, infrastructure, and industries are some of the key sectors targeted by the loT market. Studying the functionality of segmentation in the MAC is of importance to overcome cases where a transport block (TB) size provided by physical layer (PHY) may not be able to accommodate one data packet from upper layer(s). The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states.

### SUMMARY

One non-limiting and exemplary embodiment facilitates an Internet of Things, loT, device communicating with a node.

In an embodiment, the techniques disclosed herein feature: An Internet of Things, loT, device, comprising a transceiver, which, in operation, communicates a signaling message for a transmission segment of a plurality of transmission segments; and a circuitry, which, in operation determines, based on the signaling message and a segment information of a comparison segment, a segment indicator for communicating the transmission segment..

In another embodiment, the techniques disclosed herein feature a method comprising the following steps performed by an Internet of Things, loT, device:
communicating a signaling message for a transmission segment of a plurality of transmission segments; and
determining, based on the signaling message and a segment information of a comparison segment, a segment indicator for communicating the transmission segment.

In another embodiment, the techniques disclosed herein feature a node comprising a transceiver, which, in operation, communicates to an loT device a signaling message for a transmission segment of a plurality of transmission segments; and a circuitry, which, in operation determines, based on the signaling message and a segment information of a comparison segment, a segment indicator for communicating the transmission segment.

In another embodiment, the techniques disclosed herein feature a node comprising a transceiver, which, in operation, communicates to an loT device a signaling message for a transmission segment of a plurality of transmission segments; wherein signaling message comprises a re-set instruction to re-start the communication of the plurality of transmission segments.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a node-A-IoT device topology;
- **Fig. 3**: illustrates another node-A-IoT device topology;
- **Fig. 4**: illustrates the segmentation in NR and the corresponding LTE functionality as well;
- **Fig. 5**: illustrates a signaling diagram, wherein an A-IoT device successfully completes a transmission of a segmented data packet;
- **Fig. 6**: illustrates a signaling diagram, wherein an A-IoT device fails to successfully complete a transmission of a segmented data packet;
- **Fig. 7**: illustrates a first solution for an A-IoT device to successfully complete a transmission of a segmented data packet;
- **Fig. 8**: illustrates a second solution for an A-IoT device to successfully complete a transmission of a segmented data packet;
- **Fig. 9**: illustrates a further example of the second solution for an A-IoT device to successfully complete a transmission of a segmented data packet;
- **Fig. 10**: illustrates a third solution for an A-IoT device to successfully complete a transmission of a segmented data packet;
- **Fig. 11**: illustrates a general, simplified and exemplary block diagram of an IoT device and a node;
- **Fig. 12**: illustrates functional structure of the circuitries pertaining to the IoT device and the node;
- **Fig. 13**: illustrates a flow diagram for the IoT device according to an exemplary embodiment of the present disclosure;
- **Fig. 14**: illustrates a flow diagram for the node according to an exemplary embodiment of the present disclosure;
- **Fig. 15**: is a signaling diagram illustrating an exemplary exchange between an IoT device and a node according to an exemplary embodiment of the present disclosure; and
- **Fig. 16**: shows exemplary functional split options in 5G O-RAN.

### DETAILED DESCRIPTION

### 5G NR system architecture and protocol stacks

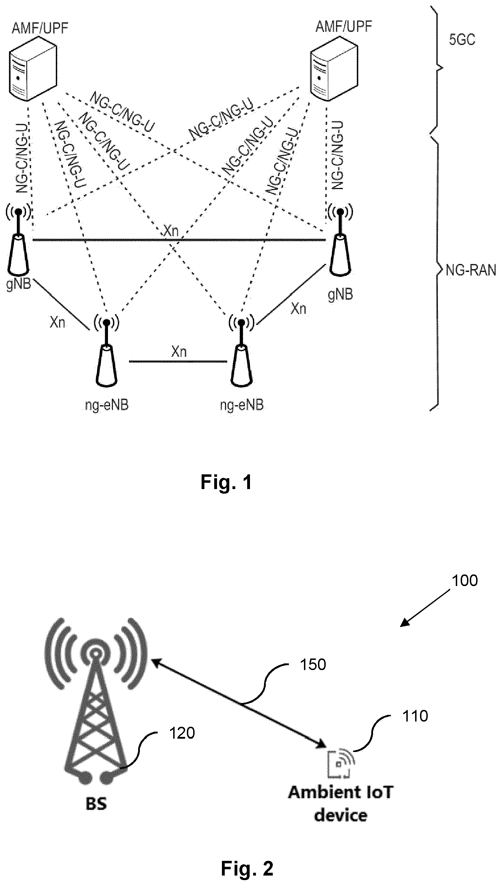

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is a device that may not support sequence number for A-loT segmentation functionalities and/or segment number and the number of segments for A-loT segmentation functionalities. The A-loT device can be an energy harvesting device or terminal having a small battery or having no battery. An A-loT device, in the following also referred to as loT device, may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Topologies

Particularly, two different topologies are exemplarily considered in this disclosure. In a first topology 100 as illustrated in **Fig. 2****,** an A-loT device 110 directly and bidirectionally communicates with a base station 120 over a wireless channel 150. In general, theA-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

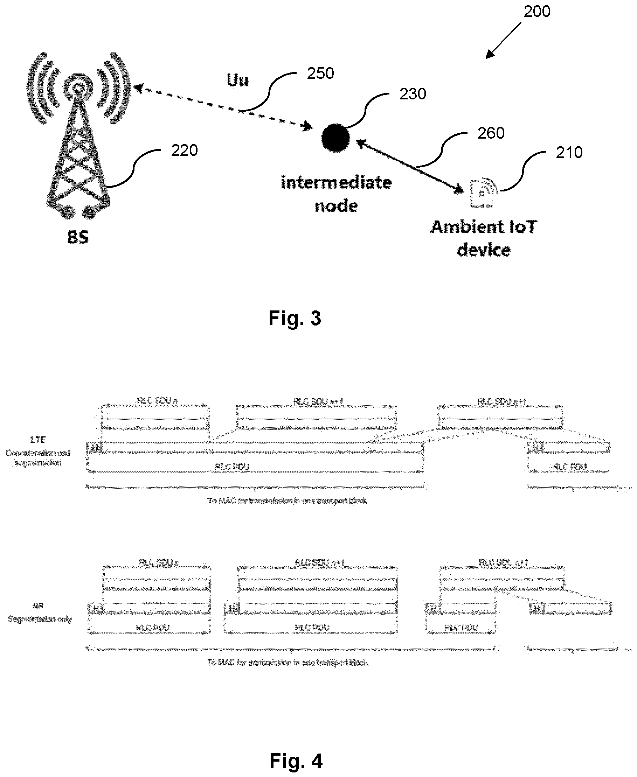

In a second topology as illustrated in **Fig. 3****,** an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 3****,** this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### Segmentation in 5G NR

The layer 2 of 5G NR is split into the following sublayers: Medium Access Control (MAC), Radio Link Control (RLC), Packet Data Convergence Protocol (PDCP) and Service Data Adaptation Protocol (SDAP). The segmentation is performed by RLC as one of the main RLC functions.

In particular, the RLC protocol is responsible for segmentation of RLC SDUs from the PDCP into suitably sized RLC PDUs. It also handles retransmission of erroneously received PDUs, as well as removal of duplicate PDUs. Depending on the type of service, the RLC can be configured in one of three modes-transparent mode, unacknowledged mode, and acknowledged mode-to perform some or all of these functions. Transparent mode is, as the name suggests, transparent, and no headers are added. Unacknowledged mode supports segmentation and duplicate detection, while acknowledged mode in addition supports retransmission of erroneous packets.

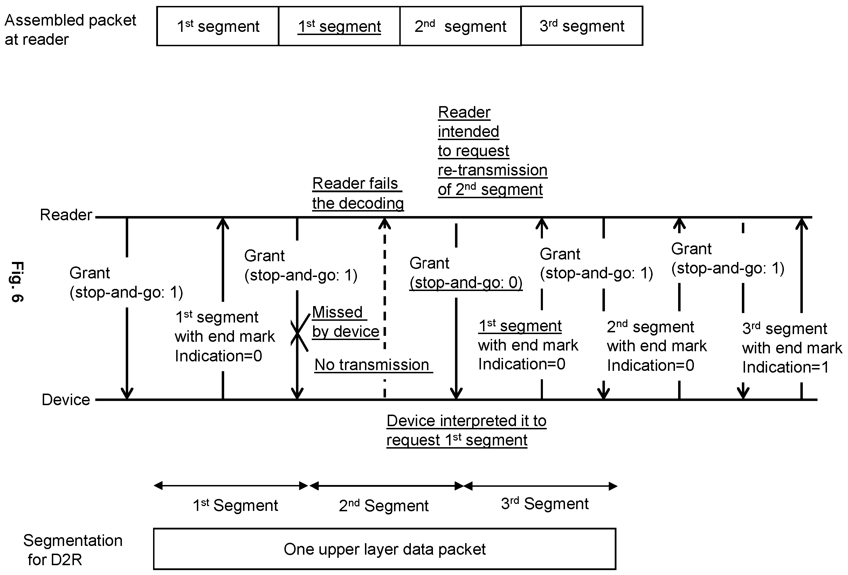

Fig. 4 illustrates the segmentation in NR and the corresponding LTE functionality as well. This figure is taken from Fig 6.10 in "5G NR - the next generation wireless access technology by E.Dahlman, S. Parkvall, and J. Sköld".

Referring to Fig. 4, a certain amount of data, that is, certain transport-block size, is selected depending on the scheduler decision. As part of the overall low latency design of NR, the scheduling decision in case of an uplink transmission is known to the device just before transmission, in the order of a few OFDM symbols before. In the case of concatenation in LTE, the RLC PDU cannot be assembled until the scheduling decision is known, which results in an additional delay until the uplink transmission and cannot meet the low-latency requirement of NR. Therefore, concatenation has been removed from RLC protocol in NR. By removing the concatenation from RLC, the RLC PDUs can be assembled in advance and upon receipt of the scheduling decision the device only has to forward a suitable number of RLC PDUs to the MAC layer, the number depending on the scheduled transport block size. To completely fill up the transport block size, the last RLC PDU may contain a segment of an SDU.

A sequence number is attached to each incoming SDU using 6 or 12 bits for unacknowledged mode and 12 or 18 bits for acknowledged mode. The sequence number is included in the RLC PDU header (see "H" in Fig. 4). In the case of a non-segmented SDU, the operation is straightforward; the RLC PDU is simply the RLC SDU with a header attached. Note that this allows the RLC PDUs to be generated in advance as the header, in the absence of segmentation, does not depend on the scheduled transport block size. This is beneficial from a latency perspective and the reason the header structure is changed compared to the one used in LTE.

However, depending on the transport-block size after MAC multiplexing, the size of (the last) of the RLC PDUs in a transport block (TB) may not match the RLC SDU size. To handle this, an SDU can be segmented into multiple segments. In this way, dynamically varying the number of RLC PDUs used to fill the TB, together with segmentation to adjust the size of the last RLC PDU, ensures the TB is efficiently utilized.

Segmentation is simple; the last preprocessed RLC SDU can be split into two segments, the header of the first segment is updated, and to the second segment a new header is added (which is not time critical as it is not being transmitted in the current TB). Each SDU segment carries the same sequence number as the original unsegmented SDU and this sequence number is part of the RLC header. To distinguish whether the PDU contains a complete SDU or a segment, a segmentation information (SI) field is also part of the RLC header, indicating whether the PDU is a complete SDU, the first segment of the SDU, the last segment of the SDU, or a segment between the first and last segments of the SDU. Furthermore, in the case of a segmented SDU, a 16-bit segmentation offset (SO) is included in all segments except the first one and used to indicate which byte of the SDU the segment represents. There is also a poll bit (P) in the header used to request a status report for acknowledged mode as described further below, and a data/control indicator, indicating whether the RLC PDU contains data to/ from a logical channel or control information required for RLC operation.

The header structure above holds for acknowledged mode. The header for unacknowledged mode is similar but does not include either the poll bit or the data/control indicator. Furthermore, the sequence number is included in the case of segmentation only.

To provide error-free delivery of data to higher layers, the RLC retransmission protocol operates between the RLC entities in the receiver and transmitter. By monitoring the sequence numbers indicated in the headers of the incoming PDUs, the receiving RLC can identify missing PDUs (the RLC sequence number is independent of the PDCP sequence number). Status reports are fed back to the transmitting RLC entity, requesting retransmission of missing PDUs. Based on the received status report, the RLC entity at the transmitter can take the appropriate action and retransmit the missing PDUs if needed.

### Segmentation in A-loT

Segmentation functionality for A-IoT is being studied by 3GPP RAN2 working group under the Rel-19 study item "study on solutions for ambient loT in NR". Since the protocol stack for ambient loT is expected to be very compact, the following protocol layers in NR will not be supported for ambient loT:
- RRC layer is not supported
- SDAP layer is not supported
- PDCP layer is not supported
- RLC layer is not supported

Instead, A-loT MAC layer and A-loT physical layer will be supported.

For the segmentation, RAN2 working group has agreed to study it in the A-loT MAC, with focus on device two reader (D2R) direction (it can be further considered on the reader two device (R2D) direction).

The motivation of studying segmentation in A-loT MAC is that the transport block (TB) size provided by physical layer (PHY) may not always be able to accommodate one data packet from upper layer(s). Therefore, A-loT MAC layer segments one upper layer data packet into multiple small data units, herein referred to as segments, where each segment is fit into one TB in PHY and then transmitted to receiver. The receiver combines multiple segments to obtain the data packet. Note that for A-loT, all buffered segment(s) are stored in upper layer(s), meaning that there is no need for Access Stratum (AS) layer (e.g. MAC layer) buffering for segmentation.

The present disclosures notes that segmentation and reassembly would add complexity. Therefore, the present disclosure aim for very simple segmentation functionality. Along this line of thinking, it is assumed that the sequence number, the segment number and (the indication of) the number of segments are *not* supported. Basically, it means the RLC segmentation in NR cannot be reused for A-loT segmentation functionality.

Without the indication of segment number and the total number of segments, it is unclear how the receiver can identify any missing or duplicated segment and further recover from the error cases.

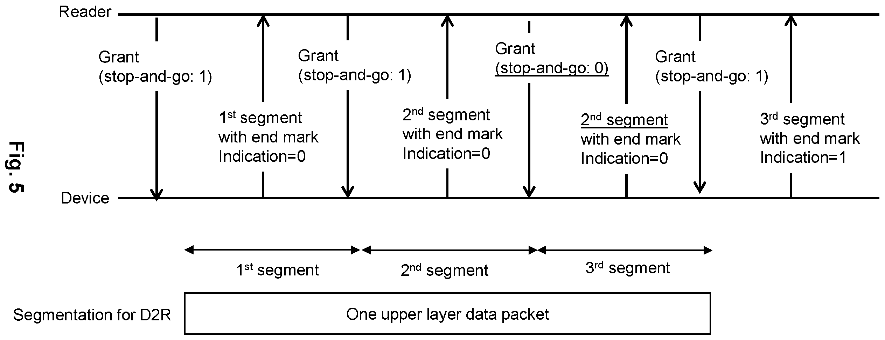

Fig. 5 illustrates a signaling diagram, wherein an A-loT device successfully completes a transmission of a segmented data packet.

According to one consideration of the present disclosure, it can be assumed that the receiver, here the reader, controls whether the transmitter, here the loT device, should move to the next segment. For example, the receiver transmits a signaling message, which comprises here a "stop-and-go" indication, to the transmitter. E.g. if the receiver indicates "1" to the transmitter, the transmitter will transmit with the next transmission opportunity a new segment.

Otherwise, e.g. if receiver detects that a TB is not correctly received, e.g. an error-detecting code such as Cyclic Redundancy Check (CRC) fails, the receiver indicates "0" and the transmitter will transmit with the next transmission opportunity the same segment again. In Fig. 5 such a situation is highlighted by the underlined text. In the example, the reader indicates after the first reception of the 2^{nd} segment a stop-and-go" indication being "0". Thus, the transmitter will transmit with the next transmission opportunity the 2^{nd} segment again.

For D2R segmentation (reader is the receiver), the signaling message, i.e. the stop-and-go bit, can for example be indicated to device with the scheduling grant to schedule the next D2R transmission.

For R2D segmentation (device is the receiver), the signaling message, i.e. stop-and-go bit, can be indicated from device to reader after receiving the current segment. Based on this indication, the reader decides whether to transmit a next segment. The stop-and-go bit can be for example an acknowledgement indication, e.g. an ACK/NACK indication.

Further, for D2R and R2D the transmitter can indicate an end mark to be "true" when transmitting the last segment (e.g. setting one bit as "1"), based on which the receiver knows that no more segments are expected and then starts to assemble the upper layer packet. In other words, Fig. 5 of the present disclosure shows for example proposes that the A-loT segmentation provides an indication that can be used to indicate to the reader (here the receiver) on whether the data is segmented, e.g. one-bit as "0" with transmitting the 1^{st} segment in Fig. 5, and whether the MAC PDU is the last segment, e.g. one-bit of as "1" in Fig. 5, or further segments are to be transmitted "0" as for example shown for the 2^{nd} segment.

### Further improvements

Fig. 6 shows a case in which an error in segment delivery cannot be avoided. If it occurs, neither the transmitter nor the receiver are able to detect it because there is no support of segment index and an indication of total number of segments.

The underlined sections in Fig. 6 highlight erroneous communication signals in view of the solution discussed in view of Fig. 5. In more detail, the reader transmits a first signaling message, i.e. the "stop-and-go" indication to the device. In response, a 1^{st} segment with an end mark "0" is transmitted to the reader. In view of the end mark, the reader is informed that the device has a next segment to be transmitted.

In response, the reader transmits a second signaling message, i.e. the stop-and-go bit "1", which is transmitted after the successful reception of the 1^{st} segment. This second signaling message is not received by the device, which is indicated by crossed arrow in Fig. 6. In response, the device does not send a 2^{nd} segment, which is indicated by the dashed arrow. In view of this situation, the reader does not know if the second signaling message has missed by the device or the receiption of the 2^{nd} segment has missed by the reader.

In view of the framework disclosed with reference to Fig. 5, i.e. that the signaling message, i.e. the stop-and-go bit in Fig. 6, indicates whether transmitter will transmit a next segment or re transmit a last segment, the reader transmit an indication to request the retransmission of the 2^{nd} segment. In view of the framework discussed in Fig. 5, the device interprets this request to re transmit last transmitted segment, namely the 1^{st} segment. In response, the reader receives twice the 1^{st} segment and the data packet at the reader is not correctly assembled.

The problem is that without the indication of segment number and the total number of segments, it is unclear how the receiver can identify any missing or duplicated segment and further recover from the error cases.

The technical problem to be solved is to avoid error cases by adding minimal complexity. For example, according to one exemplary solution the present description discusses the size of the signaling (one or two bits) and the corresponding details. Furthermore, it is assumed that the A-loT device will not support AS layer buffering for A-loT segmentation functionalities, i.e., all segment(s) are stored in upper layer(s).

The inventors have therefore identified the possibility of providing improved transmission methods to avoid one or more of the disadvantages described above. The present invention relates to various solutions and variants for such improved transmission methods.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or loT device or A-IoT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term base station or radio base station or node or reader here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term signaling message relates herein to a type of communication used to coordinate and manage the transfer of data, in particular the transfer of a data packet split into a plurality of segments, between devices, e.g. a reader and a device, or systems. It is not the actual data being transmitted (such as voice, video, or files) but in particular control information that sets up, manages, and terminates communication sessions, in particular managing the sequence of segments.

As used herein and described above, a data packet can be split at a transmitter by, e.g. the MAC layer, into a plurality of segments that are re assembled by, e.g. the MAC layer, at the receiver. As mentioned above, it is not necessary for MAC layer to buffer the segments. Instead, the data packet can be stored in upper layer(s), e.g. NAS (Non-Access Stratum) layers. For example, MAC layer can store a pointer that pointing to the beginning of the current segment. After a TB is delivered to PHY layer (and feedback from PHY layer on whether the TB transmission is successful), the MAC layer can decide on whether to move the pointer to the beginning of next segment (ready for new segment delivery) or keep the pointer at the same location (ready for retransmission of previous segment). With segmentation, a (upper layer) data packet that does not fit in a transport block (TB) can be transmitted. The TB with the segment is communicated over an air interface and processed at a lower layer, e.g. the physical layer (PHY). The size of the TB can vary dynamically based on network conditions, such as channel quality and data throughput requirements. Here, the transmitter can be for example the reader or the device and the receiver can be the device or the reader, respectively.

As used herein a transmission segment is the segment of the plurality of segments comprised in the data packet which is communicated next. The signaling message comprises control information for this transmission segment.

A comparison segment is a last transmitted segment that was transmitted on the last transmission opportunity or refers to a next to be transmitted segment (also referred to as next un-transmitted segment) for transmission on the next transmission opportunity. A segment information is an information that can be stored at the device and/or the reader for the comparison segment. For example, the information may be stored temporary for immediate use.

As used herein a segment indicator refers to a signal, a marker or a piece of data that identifies or provides information about the transmission segment. The segment indicator facilitates to manage and interpret the flow of the plurality of segments in the data packet, facilitating at least one of effective transmission, improved tracking, and improved reassembling. The segment indicator can be for example an indicator that may be directly communicated to the receiver or can be used to select at the transmitter a transmission segment for communication.

As used herein, a transmission attempt refers to the process of trying to or information from the transmitter to the receiver. Types of transmission attempts can be, for example, at least one of an initial communication of a new transmission segment, a re-transmission of a last communicated transmission segment, and a re-start of the communication of the plurality of transmission segments

Communication between the A-loT device and the base station or an intermediate node is typically standardized and may be defined by different layers, such as PHY, MAC, etc. (see above background discussion).

The present disclosure relates to an loT device, in particular an A-loT device, a base station, and an intermediate node connected to a base station, methods of communication between the A-loT device and the base station and the A-loT device and the intermediate node.

Different and exemplary implementations of the improved transmission procedure are explained in the following. For the explanation of the different implementation, some exemplary and simplifying assumptions are made.

According to one exemplary assumption in the following description with regard to the figures, the D2R segmentation (i.e. segmentation is performed by device for D2R data packet) is discussed. In the figures, the signaling message is here exemplary communicated with the grant. Alternatively, not shown in the figures, in R2D segmentation (i.e. segmentation is performed by reader for R2D data packet), the signalling message can be indicated from device to reader after receiving the current segment. Based on this indication, the reader decides whether to transmit a next segment. In this scenario, the signaling message can for example be an acknowledgement indication, e.g. an ACK/NACK indication.

### Solution - Retaining segment information of a comparison segment

It is provided an (ambient) Internet of Things, A-loT, device comprising a transceiver, which, in operation, communicates (is configured to communicate), e.g. receives or transmits, a signaling message for a transmission segment of a plurality of transmission segments; and a circuitry, which, in operation determines (is configured to determine), based on the signaling message and a segment information of a comparison segment, a segment indicator for communicating the transmission segment.

It is further provided a node comprising a transceiver, which, in operation, communicates (is configured to communicate), e.g. receives or transmits, a signaling message for a transmission segment of a plurality of transmission segments; and a circuitry, which, in operation determines (is configured to determine), based on the signaling message and a segment information of a comparison segment, a segment indicator for communicating the transmission segment.

In the situation discussed in above Fig. 6, it cannot be identified if a signaling message, i.e. stop -and-go bit or an ACK/NACK, has been missed or if a response to the signaling message, i.e. a next transmission of a segment, has been missed.

In the following, implementations are discussed that solve this issue. According to a first implementation, an additional information is communicated based on which it can be identified if the previous signaling message or the response has been missed. According to a second implementation, an additional information is stored at the device based on which it can be identified if the previous signaling message or the response has been missed.

According to both implementations, the loT device comprises a circuitry, which determines based on a segment information of a comparison segment, a segment indicator. In short, instead of using an indication of segment number and the total number of segments, the solution for the loT device is simplified using an information indicating if a next to be communicated transmission segment has already been communicated or not.

### 1^{st} Implementation - Transmitting a segment indicator

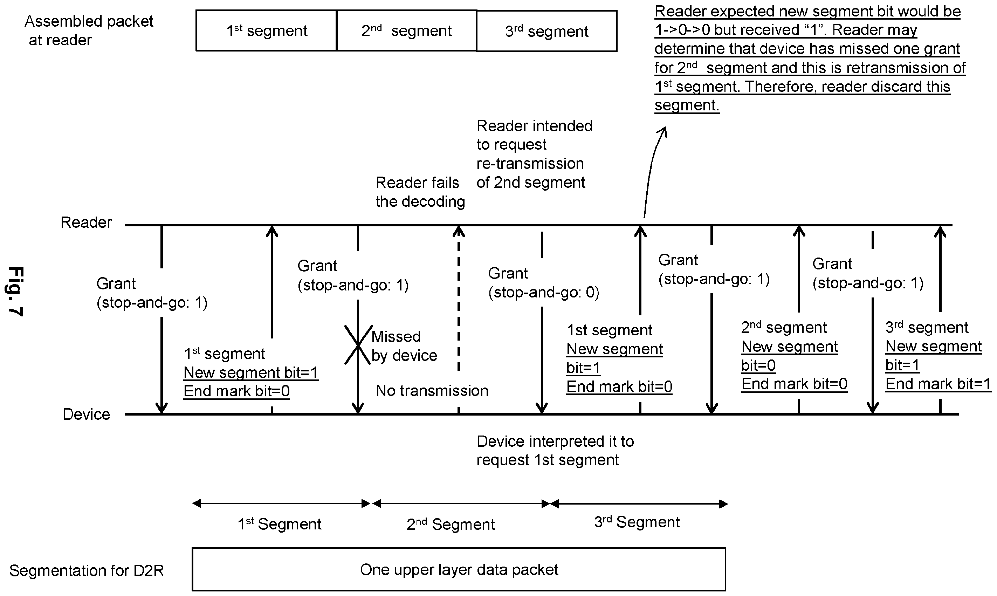

In a first implementation, shown in Fig. 7, which is similar to the framework discussed in the situation in Fig. 6, the transmitter receives the signaling message and in addition transmits a segment indicator.

In more detail, the device receives for example a 1^{st} signaling message, i.e. the stop-and-go bit with value "1", for a transmission segment of a plurality of transmission segments. Further, the circuitry determines an availability of a next to be transmitted transmission segment. In such a situation, the circuitry may determine end mark indication as discussed above. As shown in Fig. 7, the end mark indication is referred to as end mark bit, which is transmitted to the reader with transmitting the 1^{st} segment.

Further, in view of the 1^{st} implementation, the device additionally determines or stores a segment information of a comparison segment. For example, the segment information can be set as default value that is for example "1" in case a first of a plurality of segments is transmitted, for example if the end mark indication decided to be transmitted. In other words, the segment information of the comparison segment comprises a comparison value that can be for example a one-bit flag stored or determined, if a plurality of segments are transmitted. In particular, the device may store the segment information of the comparison segment, in particular the comparison value.

Based on this 1^{st} signaling message and the segment information of the comparison segment, the device determines the segment indicator. The segment indicator indicates a type of a transmission attempt for communicating the transmission segment. For example, the type of a transmission attempt can be the initial communication of a new transmission segment or a re-transmission of a last communicated transmission segment. In Fig. 7 this segment indicator is referred to as new segment bit, which is here for example "1", which can be transmitted together with the end mark bit. For example, a two-bit indicator can be transmitted to the reader.

In response to the 1^{st} signaling message, the device sends a 1^{st} segment together with the segment indicator, which here has a value of 1, and an end mark bit, which here as a value of 0. In other words, the transmitter is currently transmitting a new segment, and this is not the last segment.

Then, as discussed with reference to Fig. 6, the 2^{nd} signalling message is not received by the reader. In response, the reader requests a re-transmission of the 2^{nd} segment by sending the 3^{rd} signaling message, in Fig. 7 the stop-and go:0, i.e. the reader requests a re-transmission of the last transmitted segment.

Based on this 3^{rd} signaling message and the segment information of the comparison segment, the device determines the 2^{nd} segment indicator.

For example, it may be defined that the comparison value is toggled if a next transmission segment is new compared to a last communicated comparison segment. Toggling refers to switching between two states or conditions repeatedly. Thus, in the case described in Fig. 7, in response of the 3^{rd} signaling message requesting a re-transmission, the comparison value remains the same. Thus, the segment indicator, which is referred in Fig. 7 as new segment bit, remains to be "1" and is transmitted to the reader. In other words, the transmitter is currently re-transmitting the previous segment, and this is not the last segment.

The reader expected the new segment bit would be "0", because the reader requested two new transmissions and one re-transmission. However, the receiver received a segment indicator with value "1". Thus, the reader determines that the device has missed one signaling message, e.g. a grant for the 2^{nd} segment. Further, the reader determines that this is a re-transmission of the 1^{st} segment. Therefore, the reader can discard one of the received 1^{st} segments.

The reader proceeds with a 4^{th} signaling message requesting the next transmission segment and proceeds until the end mark bit indicates the last segment.

The following table 1 summarizes a possible new two bit indicator, which comprises the new segment indicator, referred to as new segment bit and the end mark bit.

**Table 1**

| New segment bit | End mark bit | Behavior |
|---|---|---|
| Same as previous transmission (i.e. not toggled). | 0 | The transmitter is currently re-transmitting the previous segment, and this is not the last segment |
| Different than previous transmission (i.e. toggled); or 1 for the first segment. | 0 | The transmitter is currently transmitting a new segment, and this is not the last segment. |
| Same as previous transmission (i.e. not toggled). | 1 | The transmitter is currently re-transmitting the previous segment, and this is the last segment. |
| Different than previous transmission (i.e. toggled); or 1 for the first segment. | 1 | The transmitter is currently transmitting a new segment, and this is the last segment. |

In summary, compared to the solution in Fig. 5 and 6, when transmitting a segment, the transmitter (device for D2R, or reader for R2D) not only indicates whether this is the last segment, but also indicates whether this is a new segment or re-transmission of previous segment using the new segment bit.

The above description has been made in view of D2R segmentation. Even not shown, the solution is applicable to R2D segmentation. For example, the transceiver (of loT device) transmits the signaling message, e.g. an acknowledgement of receiving a last transmission segment. Then the transceiver (of loT device) receives a transmission segment and the segment indicator. Further, the circuitry assembles the received transmission segment into a data packet based on the received segment indicator and the determined segment indicator.

According to a variant, the signaling message comprises a segment instruction, which can indicate an acknowledgement of a last transmission segment. This acknowledgement can be comprised additionally or alternatively to the type of transmission attempt, i.e. the stop-and-go bit, in the segment instruction.

### 2^{nd} Implementation - Selecting a transmission segment based on the segment indicator for transmission

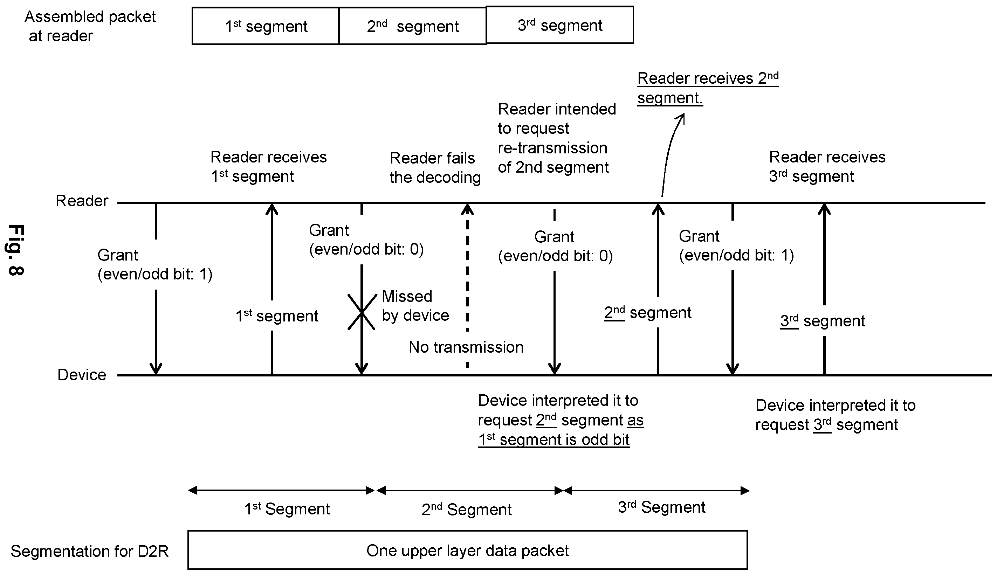

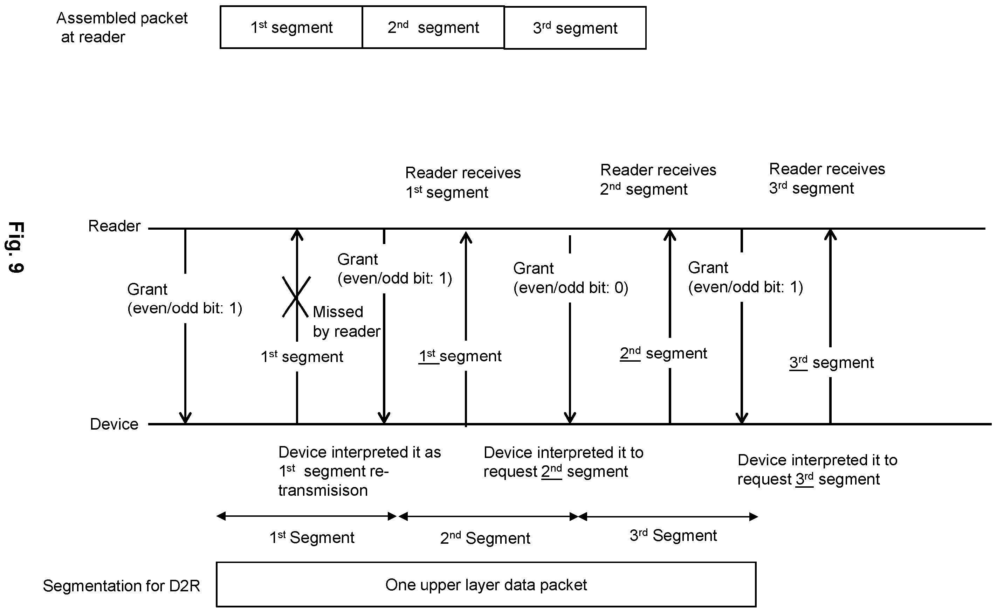

In a second implementation, shown in Figs. 8 and 9, which is similar to the framework discussed in the solution in Fig. 6, the device receives the signaling message and can select a transmission segment based on a determined segment indicator. The selected segment can then be transmitted or assembled.

In this implementation, the segment information of the comparison segment can comprise a parity value corresponding to a sequence number of the comparison segment. Parity refers to a property of integers that indicates whether a number is odd or even. In other words, the upper layer segment is counted as odd, even, odd, even... (corresponding to 1^{st}, 2^{nd}, 3^{rd} ...). Start from even (corresponding to 0, 1, 2.. is also possible). This does not mean that device needs to remember the segment index as 1, 2, 3, etc, to remember a segment number, or to remember a total number of segments. Rather, the device may need to store a one-bit information, e.g.to represent if the number of the last transmitted segment is odd or even (or alternatively, the number of next un-transmitted segment is odd or even). In summary, the parity value can be a one-bit flag indicating the parity of the comparison segment. Further, in view of the 2^{nd} implementation, the device can additionally store the segment information of the comparison segment in the device memory. Thus, it is facilitated that the parity of the segment number is available for transmitting the plurality of segments and can be updated based on the last or next to be communicated segment.

Additionally or alternatively, the signaling message can indicate a parity corresponding to a sequence number of the transmission segment. This is shown in Fig. 8, which is based on Fig. 5. Here, the "go to bit" has been substituted with an "even/odd bit". With the 1^{st} signaling message the "even/odd bit" can be "1" to initiate a transmission of a 1^{st} segment. A value of "0" can indicate an even number segment and a value of "1" can indicate an odd number segment.

Additionally or alternatively, the circuitry can compare the received signaling message and the stored segment information of the comparison segment to determine the segment indicator. In particular, the segment indicator is determined by comparing the parity corresponding to the sequence number of the comparison segment and the parity corresponding to the sequence number of the transmission segment received with the signaling message. Thus, only one bit needs to be compared.

The segment indicator can thus be seen as a type of transmission attempt for communicating the transmission segment. For example, the type of transmission attempt is an initial communication of a new transmission segment if the received signaling message and the stored segment information are equal. Alternatively, the type of transmission attempt is a re-transmission of a last communicated transmission segment if the received signaling message and the stored segment information are not equal.

Thus, as shown in Fig. 8, in response to the 1^{st} signaling message, the device determines that the next transmission is an initial transmission of a new transmission segment and selects the 1^{st} segment to be transmitted by the next transmission opportunity. After the transmission, the device may update the segment information of the comparison segment for the next transmission.

Even not shown in Fig. 8, the circuitry can determine an availability of a next to be transmitted transmission segment. In such a situation, the circuitry determines an end mark indication as discussed above. Even not shown in Fig. 8, the end mark indication may be transmitted to the reader with transmitting the 1^{st} segment.

Then, similar to the situation in Fig. 6, the 2^{nd} signaling message is missed, and thus, the device does not transmit a segment at the scheduled transmission opportunity.

Then, the reader sends a 3^{rd} signaling message. As the reader intends to request a retransmission of the 2^{nd} segment, the reader determines a parity value corresponding to the number of 2^{nd} segment, which in the example shown in Fig. 8 is "0". This parity value is communicated to the device with the signaling message.

Then, the device compares the 3^{rd} signaling message the with stored segment information of the comparison segment and determines the segment indicator, which is an initial communication of a new transmission segment. Thus, the device selects based on the segment indicator the 2^{nd} segment.

Fig. 9 is similar to Fig. 8 and discusses the case in which the device transmits a segment and the reader misses the reception this segment.

In such a case, the 1^{st} and 2^{nd} signaling message of the reader comprise the same parity value. Thus, the device can interpret the 2^{nd} signaling message as requesting a re-transmission of the 1^{st} segment.

Figs. 8 and 9 relate to the D2R segmentation. In particular, the circuitry, which, in operation, selects a transmission segment based on the segment indicator and the transceiver, which, in operation, transmits, the selected transmission segment.

According to a not shown solution for the R2D segmentation, the transceiver can receive the signaling message and a transmission segment. Then, the circuitry decides whether to assemble the received transmission segment into a data packet based on the determined segment indicator.

Even if not detailed above, the comparison segment can be a last transmitted segment that has been previously communicated or a next to be transmitted segment for communication with a next transmission opportunity.

If the comparison segment is a last transmitted segment, the device stores the odd/even value of the last communicated, in particular transmitted or received, segment. Assuming D2R segmentation, if the value is the same, the device will re-transmit the last transmitted segment.

Otherwise, the device will transmit the next new segment. Assuming R2D segmentation, if the value is the same, the device will determine that this is a re-transmission and therefore, may discard the segment. Otherwise, the device will determine this is a new segment and store it for packet assembling later.

If the comparison segment is a next to be transmitted segment, the device stores the odd/even value of the next expected segment. Assuming the D2R segmentation, if value is the same, device will transmit the next un-transmitted segment. Otherwise, the device will transmit the last transmitted segment. Assuming R2D segmentation, if value is the same, device will determine this is a new segment and store it for packet assembling later. Otherwise, the device will determine this is a re-transmission and therefore may discard it.

In summary, the 2^{nd} implementation proposes to transmit a signaling message with an even/odd segment indication from the scheduler (reader). For D2R segmentation, the device is able to know whether to transmit next new segment or re-transmit previous segment. For R2D segmentation, the device is able to know whether the received segment is a re-transmission or a new one.

According to a variant, the signaling message comprises a segment instruction, which can indicate an acknowledgement of a last transmission segment or the type of transmission attempt, i.e. the stop-and-go bit. This segment instruction can be comprised additionally to the parity value in the segment instruction.

### Modifications

Further modifications are discussed that can be combined with the above discussed implementations.

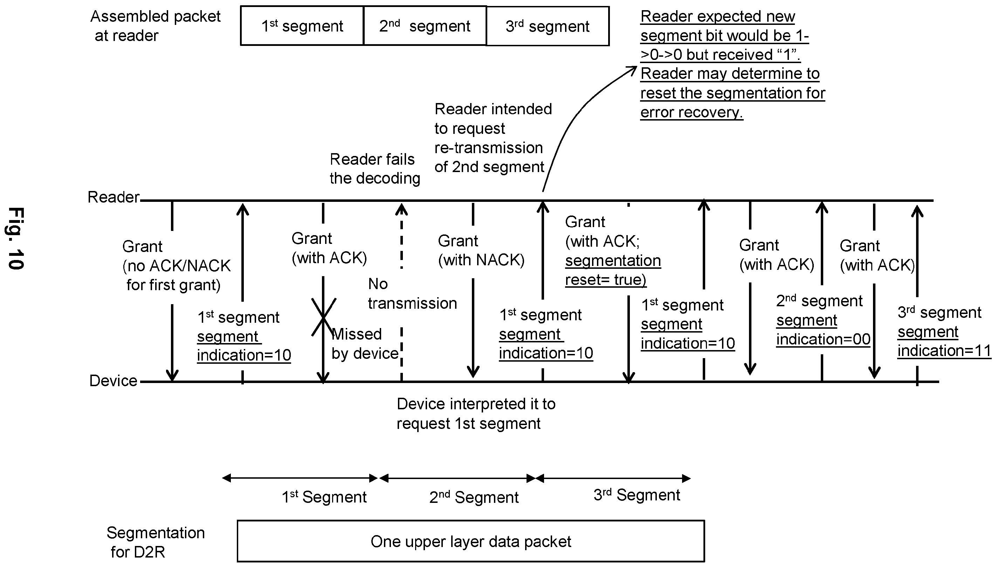

A first modification is shown in Fig. 10. In particular, the reader can transmit signaling message comprising a re-start instruction to re-start the communication of the plurality of transmission segment. For example, in Fig. 10, the 4^{th} signaling message comprises a segment instruction indicating acknowledgment. Additionally, the 4^{th} signaling message comprises the re-start instruction to re start the communication of the plurality of segments. The first modification is shown in combination with the 1^{st} implementation but may be also implemented with the 2^{nd} implementation. For example, when combined with 2^{nd} implementation, if the re-start instruction is set to "true", the other segment instruction (e.g. parity value) in the signaling message will be ignored. In other words, the re-start instruction has a higher priority than other segment instruction.

Further, in the example shown in Fig. 10, the re-start instruction is an explicit bit field. Alternatively, the re-start instruction can be implicit, for example a signaling message without having ACK or NACK can imply that the segmentation is reset to the beginning of current upper layer packet.

Additionally, the first modification may be implemented independent of the 1^{st} and 2^{nd} implementation. For example, the node may comprise a transceiver, which, in operation, transmits to an loT device a re-start instruction to re-start the communication of the plurality of transmission segments. In response, a transceiver receives a 1^{st} segment of a plurality of segments.

According to a first variant of the first modification, for D2R segmentation, the reader can use the re-start instruction to request the device to (re)-start transmission from the first segment of current upper layer packet.

According to a second variant of the first modification, for R2D segmentation, the reader can use the re-start instruction to request device to clear the stored segments of current upper layer packet and inform the device that the upcoming data is the first segment.

According to a third variant of the first modification, the reader may decide to use such indication depending on one or more of the following conditions:
- no received transmission segment at a scheduled resource, e.g. the reader cannot detect a TB transmission from the device at the scheduled time/frequency resources;
- error detection in at least one received transmission segment, e.g. one or more TB(s) have an error, e.g. fail the CRC check; and
- received segment indicator is different than the determined segment indicator, e.g. a new segment indication that received by reader does not have expected value as for example shown in Fig. 10.

A second modification, which may be implemented with at least one of the 1^{st} and 2^{nd} implementations or independent from the 1^{st} and 2^{nd} implementations, addresses the case that one service round for command service, for example initiated by one signaling message, e.g. a paging message, only needs to deliver one upper layer packets. For example, a signaling message comprises a packet instruction to re-start the communication of a data packet comprising the plurality of segments. The information is used to distinguish whether the paging is triggering the same or different upper layer data packet compared to previous paging. If the new paging is intended for new upper layer packet, the transmitter starts with the first segment of the next un-transmitted upper layer packet.

If the new paging is intended for the same upper layer packet as previous paging, the transmitter starts with the first segment of the last transmitted upper layer packet. In combination with the 1^{st} and 2^{nd} implementation, the segment indicator may be ignored and the first segment of the corresponding upper layer packet will be communicated.

According to an example of the second modification, the package instruction can comprise at least one of
- identifier such as at least a part of a session ID, a service ID in CN;
- a transaction ID, which may be generated by the reader; and
- a specific data indication bit, e.g. a toggled bit means that new upper layer packet will be requested for D2R or delivered for R2D in this paging round.

According to a third modification, the first and second modification may be combined to address the case that one service round for command service, for example initiated by one signaling message, e.g. a paging message, needs to deliver more than one upper layer packets. The third modification can be combined with the 1^{st} and/or 2^{nd} implementation. In more detail, the signaling message comprises or consists of a two bit instruction, in particular a re-set instruction based on an availability of a next to be transmitted transmission segment and a the packet instruction indicates depending on the re-set instruction to re-start the communication of a currently transmitted data packet or a next to be transmitted data packet.

The following table 2 summarizes a possible new two bit signaling message. When combined with the 1^{st} and/or 2^{nd} implementations, the new two bit signaling has a higher priority than other segment instruction used in 1^{st} and 2^{nd} implementations. For example, when both are indicated, the higher priority one will be followed and the lower priority one will be ignored.

**Table 2**

| Packet instruction | re-set instruction | Behavior |
|---|---|---|
| 0 | 0 | Previous segment of current upper layer packet is retransmitted. |
| 1 | 0 | Next un-transmitted segment of current upper layer packet is transmitted. |
| 0 | 1 | Segmentation of current upper layer packet is reset. The first segment of current upper layer packet is transmitted |
| 1 | 1 | Segmentation of next un-transmitted upper layer packet is (re)set. The first segment of the next un-transmitted upper layer packet is transmitted (and this upper layer packet becomes the current one. |

### Further implementations

As mentioned above, functionality of segmentation in the MAC is a study topic. Without the indication of segment number and the total number of segments, it is unclear how the receiver can identify any missing or duplicated segment and further recover from the error cases.

To facilitate the communication considering the mentioned limitations, the loT device determines, based on the signaling message and a segment information of a comparison segment, a segment indicator.

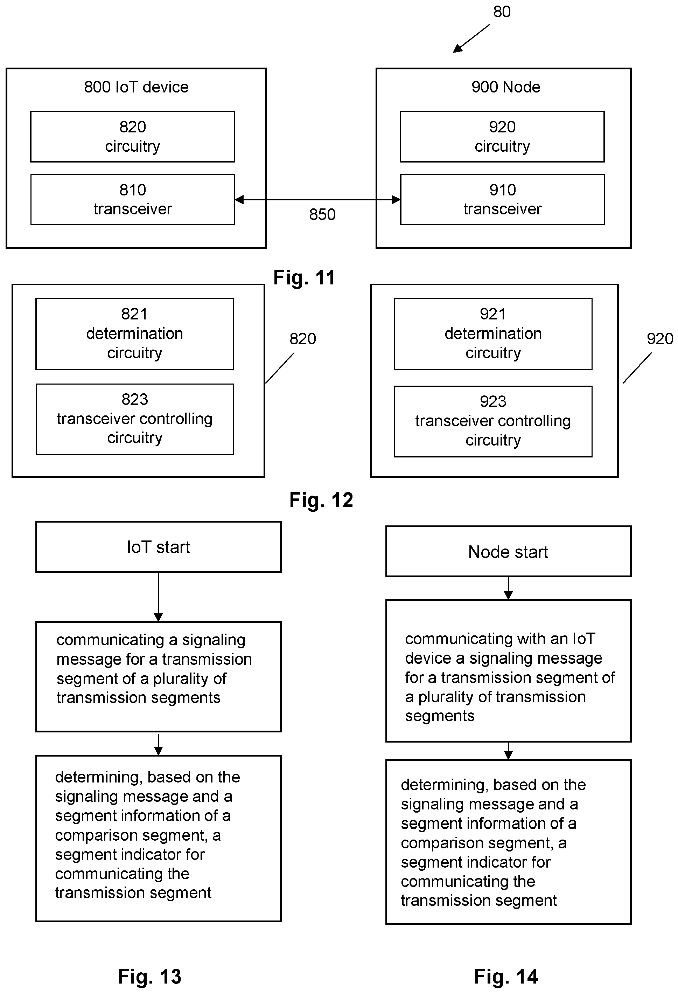

**Fig. 11** illustrates a general, simplified and exemplary block diagram of an loT device 800 and a node (base station or intermediate node connected to a base station) 900 forming a communication system 80. In the following, it is exemplarily assumed that node 900 is a base station functioning as a scheduling device like an eNB or gNB (network node). The loT device 800 may be a wearable, smart home device, automotive device, sensor, smart key, or healthcare device, for example.

The loT device 800 and the base station 900 (eNB/gNB) are communicating with each other over a (wireless) physical channel 850, respectively, using their transceivers 810 (IoT device side) and 910 (base station side). The base station 900 and the loT device 800 are capable of transmitting as well as receiving radio signals via the channel 850. Together, the base station 900 and the loT device 800 form a communication system 80, for example, a 5G or future communication system. The communication system 80 may further include other entities such as further base stations, intermediate nodes and/or loT devices. Any of the above-described embodiments may be implemented in the A-loT device 800, the base station 900 and/or communication system 80 where appropriate.

The loT device 800 comprises a transceiver 810 and a (processing) circuitry 820, and the base station 900 comprises a transceiver 910 and a (processing) circuitry 920. The transceiver 810, 910 in turn comprise and/or function as a receiver and/or a transmitter. In this disclosure, in other words, the term "transceiver" is used for hardware and/or software components that allow the loT device 800, and the base station 900 to transmit and/or receive radio signals over the wireless channel 150, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions.

In some embodiments, the transceiver 810 of the loT device 800 communicates a signaling message such as an acknowledgement of a last transmission segment and/or a type of transmission attempt, and/or a signaling message indicating a parity corresponding to a sequence number of the transmission segment. The circuitry 820 of the loT device 800 determines, based on the signaling message and a segment information of a comparison segment, a segment indicator.

In some embodiments, the transceiver 910 of the node 900 communicates a signaling message such as an acknowledgement of a last transmission segment and/or a type of transmission attempt, and/or a signaling message indicating a parity corresponding to a sequence number of the transmission segment. The circuitry 920 of the node 900 determines, based on the signaling message and a segment information of a comparison segment, a segment indicator.

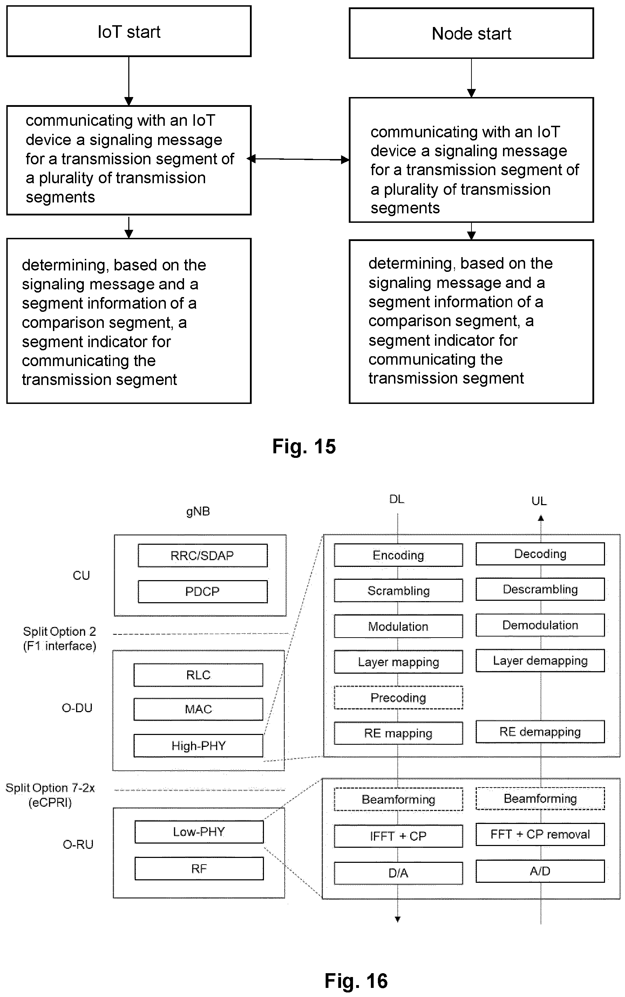

The circuitries may be configured by software to perform the functions as described in any of the above embodiments. As shown in **Fig. 12** the circuitry 820 of the loT device may further comprise a functional module referred to as determination circuitry 821 for performing the determination. A transceiver controlling circuitry 823 is a functional module that controls the transceiver 810 (in Fig. 15) to receive the message. Moreover, as shown in **Fig. 12****,** the circuitry 920 of the base station or an intermediate node may further comprise a functional module referred to as determination circuitry 921 for performing any determinations. A transceiver controlling circuitry 923 is a functional module that controls the transceiver 910 (in Fig. 15) to transmit the message.

A corresponding exemplary method for an loT device, as shown in **Fig. 13****,** comprises the following steps performed by an loT device:
communicating a signaling message for a transmission segment of a plurality of transmission segments; and
determining, based on the signaling message and a segment information of a comparison segment, a segment indicator for communicating the transmission segment

A corresponding exemplary method for node, as shown in **Fig. 14****,** comprises the following steps performed by a node:
communicating with an Internet of Things, loT, device a signaling message for a transmission segment of a plurality of transmission segments; and
determining, based on the signaling message and a segment information of a comparison segment, a segment indicator for communicating the transmission segment.

**Fig. 15** is a signaling diagram of an exemplary and simplified implementation of the improved transmission procedure, illustrating the exchange of common understanding between the different participating entities (here the loT device and the node) and the steps performed at these entities. The loT behavior and node behavior follow the above described loT device and node and the respective methods.

Moreover, it is noted that the loT device as described in the above, for example in any of the above embodiments, implementations, modifications, and examples, may be integrated on an integrated circuit (IC). Moreover, the integration does not necessary include the entire transceiver. The transceiver is, in general, not necessarily a part of the loT device. The loT device may be connected to an external antenna (module) connected to the loT device over a port on the loT device. Similar structure applies to the node. Further, in the above, in particular the loT device has been describe. Any of the integration to the loT device may be integrated in the node.

Moreover, a computer program is provided including code instructions stored on a non-transitory medium, which when executed on one or more processor, causes the one or more processors to execute a method according to any of the above-mentioned embodiments and examples.

### RRC connection setup and reconfiguration procedures

Interactions between a UE, gNB, and AMF (an 5GC entity) in the context of a transition of the UE from RRC_IDLE to RRC_CONNECTED for the NAS part are described(see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 16** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI. Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a statellite or a High Altitude Pseudo Statellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient loT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a statellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

The following numerated clauses relate to aspects of the invention.

Aspect 1: An Internet of Thing, loT, device, comprising: a transceiver, which, in operation, communicates a signaling message for a transmission segment of a plurality of transmission segments; and a circuitry, which, in operation determines, based on the signaling message and a segment information of a comparison segment, a segment indicator for communicating the transmission segment.

Aspect 2: The loT device according to aspect 1, wherein the segment indicator indicates a type of a transmission attempt for communicating the transmission segment. Additionally or alternatively, the segment indicator is a type of transmission attempt for communicating the transmission segment.

Aspect 3: The loT device according to aspect 2, wherein the type of transmission attempt comprises at least one of an initial communication of a new transmission segment, a re-transmission of a last communicated transmission segment, and a re-start of the communication of the plurality of transmission segments.

Aspect 4: The loT device according to according to any one of the previous aspects, wherein the circuitry, which, in operation, stores the segment information of the comparison segment.

Aspect 5: The loT device according to any one of the previous aspects, wherein the segment information of the comparison segment comprises a comparison value that is toggled if a next transmission segment is new compared to a last communicated comparison segment, optionally wherein the comparison value is a one-bit flag hold for the comparison segment.

Aspect 6: The loT device according to any one of the previous aspects, wherein the transceiver, which, in operation, receives the signaling message and transmits the segment indicator.

Aspect 7: The loT device according to any one of aspects 1 to 5, wherein the transceiver, which, in operation, transmits the signaling message; the transceiver, which, in operation, receives a transmission segment and the segment indicator; and the circuitry, which, in operation, further assembles the received transmission segment into a data packet based on the received segment indicator and the determined segment indicator.

Aspect 8: The loT device according to any one of the previous aspects, wherein the segment information of the comparison segment comprises a parity value corresponding to a sequence number of the comparison segment, optionally wherein the parity value is a one-bit flag indicating the parity.

Aspect 9: The loT device according to any one of the previous aspects, wherein the signaling message indicates a parity corresponding to a sequence number of the transmission segment, optionally where the signaling message comprises one-bit flag indicating the parity.

Aspect 10: The loT device according to according to any one of the previous aspects, wherein the circuitry, which, in operation, determines, by comparing the signaling message and the segment information of the comparison segment, the segment indicator.

Aspect 11: The loT device according to aspects 7 to 9, wherein the circuitry, which, in operation, determines the segment indicator by comparing the parity corresponding to the sequence number of the comparison segment and the parity corresponding to the sequence number of the transmission segment.

Aspect 12: The loT device according to any one of the previous aspects, wherein the comparison segment is a last transmitted segment that has been previously communicated or a next to be transmitted segment for communication with a next transmission opportunity.

Aspect 13: The loT device according to any one of the previous aspects, wherein the transceiver, which, in operation, receives the signaling message; the circuitry, which, in operation, further selects a transmission segment based on the segment indicator; and the transceiver, which, in operation, transmits, the selected transmission segment.

Aspect 14: The loT device according to any one of the aspects 1 to 12, wherein the transceiver, which, in operation, receives the signaling message and receives a transmission segment; and the circuitry, which, in operation, further decides whether to assemble the received transmission segment into a data packet based on the determined segment indicator.

Aspect 15: The loT device according to any one of the previous aspects, wherein the signaling message comprises at least one of a packet instruction for communicating a data packet comprising the plurality of segments, and a segment instruction for communicating the transmission segment of the plurality of segments.

Aspect 16: The loT device according to aspect 15, wherein the segment instruction indicates at least one of an acknowledgement of a last transmission segment and a type of transmission attempt.

Aspect 17: The loT device according to any one of the previous aspects, wherein the circuitry, which, in operation, further determines an end mark indication based on an availability of a next to be transmitted transmission segment; and the transceiver, which, in operation, communicates the end mark indication.

Aspect 18: A node comprising: a transceiver, which, in operation, communicates to an loT device a signaling message for a transmission segment of a plurality of transmission segments; and a circuitry, which, in operation determines, based on the signaling message and a segment information of a comparison segment, a segment indicator for communicating the transmission segment.

Aspect 19: The node of aspect 18, wherein the signaling message comprises a re-set instruction to re-start the communication of the plurality of transmission segments, optionally wherein the re-set instruction is a one-bit flag.

Aspect 20: The node of aspect 19, wherein the instruction depends on at least of one of the following: no received transmission segment at a scheduled resource; error detection in at least one received transmission segment; and a received segment indicator is different than the determined segment indicator.

Aspect 21: The node of any one of aspects 18 to 20, wherein the signaling message comprises a packet instruction to re-start the communication of a data packet comprising the plurality of segments, optionally wherein the packet instruction is a one-bit flag.

Aspect 22: The node of any one of aspects 18 to 21, wherein the signaling message comprises an re-set instruction based on an availability of a next to be transmitted transmission segment, optionally wherein the packet instruction of aspect 21 indicates depending on the re-set instruction to re-start the communication of a currently transmitted data packet or a next to be transmitted data packet.

Aspect 23: A method comprising the following steps performed by an Internet of Things, loT, device: communicating a signaling message for a transmission segment of a plurality of transmission segments; and determining, based on the signaling message and a segment information of a comparison segment, a segment indicator for communicating the transmission segment.

Aspect 24: A method comprising the following steps performed by node:communicating with an Internet of Things, loT, device a signaling message for a transmission segment of a plurality of transmission segments; and determining, based on the signaling message and a segment information of a comparison segment, a segment indicator for communicating the transmission segment.

Aspect 25: A node comprising: a transceiver, which, in operation, communicates to an loT device a signaling message for a transmission segment of a plurality of transmission segments; wherein the signaling message comprises a re-set instruction to re-start the communication of the plurality of transmission segments.

## Claims

1. . An Internet of Thing, loT, device, comprising:
a transceiver, which, in operation, communicates a signaling message for a transmission segment of a plurality of transmission segments; and
a circuitry, which, in operation determines, based on the signaling message and a segment information of a comparison segment, a segment indicator for communicating the transmission segment.

2. . The loT device according to claim 1, wherein
the segment indicator indicates a type of a transmission attempt for communicating the transmission segment;
and/or
the segment indicator is a type of transmission attempt for communicating the transmission segment;
optionally wherein the type of transmission attempt comprises at least one of an initial communication of a new transmission segment, a re-transmission of a last communicated transmission segment, and a re-start of the communication of the plurality of transmission segments.

3. . The loT device according to according to any one of the previous claims, wherein the circuitry, which, in operation, stores the segment information of the comparison segment.

4. . The loT device according to any one of the previous claims, wherein the segment information of the comparison segment comprises a comparison value that is toggled if a next transmission segment is new compared to a last communicated comparison segment, optionally wherein the comparison value is a one-bit flag hold for the comparison segment.

5. . The loT device according to any one of the previous claims,
wherein the transceiver, which, in operation, receives the signaling message and transmits the segment indicator;
or
wherein the transceiver, which, in operation, transmits the signaling message; the transceiver, which, in operation, receives a transmission segment and the segment indicator; and the circuitry, which, in operation, further assembles the received transmission segment into a data packet based on the received segment indicator and the determined segment indicator.

6. . The loT device according to any one of the previous claims, wherein the segment information of the comparison segment comprises a parity value corresponding to a sequence number of the comparison segment, optionally wherein the parity value is a one-bit flag indicating the parity.

7. . The loT device according to any one of the previous claims, wherein the signaling message indicates a parity corresponding to a sequence number of the transmission segment, optionally where the signaling message comprises one-bit flag indicating the parity.

8. . The loT device according to according to any one of the previous claims, wherein the circuitry, which, in operation, determines, by comparing the signaling message and the segment information of the comparison segment, the segment indicator,
optionally wherein the circuitry, which, in operation, determines the segment indicator by comparing a parity corresponding to a sequence number of the comparison segment and a parity corresponding to a sequence number of the transmission segment.

9. . The loT device according to any one of the previous claims, wherein the comparison segment is a last transmitted segment that has been previously communicated or a next to be transmitted segment for communication with a next transmission opportunity.

10. . The loT device according to any one of the previous claims,
wherein the transceiver, which, in operation, receives the signaling message; the circuitry, which, in operation, further selects a transmission segment based on the segment indicator; and the transceiver, which, in operation, transmits, the selected transmission segment;
or
wherein the transceiver, which, in operation, receives the signaling message and receives a transmission segment; and the circuitry, which, in operation, further decides whether to assemble the received transmission segment into a data packet based on the determined segment indicator.

11. . The loT device according to any one of the previous claims, wherein the signaling message comprises at least one of a packet instruction for communicating a data packet comprising the plurality of segments, and a segment instruction for communicating the transmission segment of the plurality of segments;
optionally wherein the segment instruction indicates at least one of an acknowledgement of a last transmission segment and a type of transmission attempt.

12. . The loT device according to any one of the previous claims, wherein
the circuitry, which, in operation, further determines an end mark indication based on an availability of a next to be transmitted transmission segment; and
the transceiver, which, in operation, communicates the end mark indication.

13. . A node comprising:
a transceiver, which, in operation, communicates to an loT device a signaling message for a transmission segment of a plurality of transmission segments; and
a circuitry, which, in operation determines, based on the signaling message and a segment information of a comparison segment, a segment indicator for communicating the transmission segment.

14. . The node of claim 13,
wherein the signaling message comprises a re-set instruction to re-start the communication of the plurality of transmission segments, optionally wherein the re-set instruction is a one-bit flag, optionally wherein the re-start instruction depends on at least of one of the following: no received transmission segment at a scheduled resource; error detection in at least one received transmission segment; and a received segment indicator is different than the determined segment indicator.
and/or
wherein the signaling message comprises a packet instruction to re-start the communication of a data packet comprising the plurality of segments, optionally wherein the packet instruction is a one-bit flag.

15. . The node of any one of claims 13 to 14, wherein the signaling message comprises an re-set instruction based on an availability of a next to be transmitted transmission segment, optionally wherein the packet instruction of claim 14 indicates depending on the re-set instruction to re-start the communication of a currently transmitted data packet or a next to be transmitted data packet.
